# EUROPÄISCHE PATENTSCHRIFT

(11) **EP 2 260 263 B1**
(45) Veröffentlichungstag und Bekanntmachung des Hinweises auf die Patenterteilung: **08.04.2015**
(21) Anmeldenummer: 09724006.3
(22) Anmeldetag: 02.02.2009
(51) Int. Cl.: G01B 11/25, G01B 11/275

(54) **FAHRWERKSVERMESSUNGSSYSTEM SOWIE VERFAHREN ZUM BESTIMMEN DER LAGEPARAMETER VON MESSKÖPFEN EINES FAHRWERKSVERMESSUNGSSYSTEMS**
CHASSIS-MEASURING SYSTEM AND METHOD FOR DETERMINING THE POSITION PARAMETERS OF PROBES OF A CHASSIS-MEASURING SYSTEM
SYSTÈME DE MESURE DE LA GÉOMÉTRIE D'UN VÉHICULE, AINSI QUE PROCÉDÉ DE DÉTERMINATION DES PARAMÈTRES DE POSITION DE TÊTES DE MESURE D'UN SYSTÈME DE MESURE DE LA GÉOMÉTRIE D'UN VÉHICULE

(30) Priorität: 26.03.2008 DE 102008000833
(43) Veröffentlichungstag der Anmeldung: 15.12.2010
(73) Patentinhaber: Robert Bosch GmbH, 70442 Stuttgart (DE)
(72) Erfinder: MUHLE, Daniel, 30451 Hannover (DE); SVENSSON, Anke, 38100 Braunschweig (DE); ROLAND, Matthias, 30167 Hannover (DE); WENDT, Axel, 31134 Hildesheim (DE)
(86) Internationale Anmeldenummer: PCT/EP2009/051110
(87) Internationale Veröffentlichungsnummer: WO 2009/118211

(56) Entgegenhaltungen:
- DE-A1- 3 618 480
- FR-A1- 2 808 082
- US-A- 4 130 362
- US-A- 5 978 077
- US-A1- 2004 039 544

## Beschreibung

Die Erfindung betrifft ein Fahrwerksvermessungssystem mit wenigstens einem Paar von einander in Fahrzeugquerrichtung gegenüberliegenden Messköpfen sowie ein Verfahren zum Bestimmen der Lageparameter von Messköpfen eines Fahrwerksvermessungssystems.

Bei der optischen, berührungslosen Fahrwerksvermessung, z. B. bei der Messung von Spur und Sturz an Kraftfahrzeugen, werden Messköpfe mit Messkameras eingesetzt, die jeweils ein Rad des Kraftfahrzeugs oder ein daran angebrachtes Target erfassen. Aus den Messwerten lässt sich die Lage von Radachsen, Drehachsen, Radzentren oder Drehzentren errechnen, und daraus können die Werte Spur und Sturz des Kraftfahrzeugs bestimmt werden.

Eine Grundvoraussetzung eines berührungslosen Fahrwerksvermessungssystems ist es, dass die geometrischen Lageparameter der Messköpfe zueinander, insbesondere deren Abstand und deren Orientierung bekannt sind, und dass die Messwerte aller Messköpfe in einem gemeinsamen Koordinatensystem bzw. Bezugssystem vorliegen bzw. in solch ein gemeinsames Koordinatensystem transformiert werden. Aus der DE 3618480 ist es bekannt, dass Punkte an einem Passpunktkörper von den Messköpfen gemessen werden. Aus der Messung der Passpunkte im lokalen Bezugssystem der einzelnen Messköpfe und den bekannten Koordinaten der Passpunkte lässt sich für jeden Messkopf dessen lokales Koordinatensystem in das gemeinsame globale Koordinatensystem transformieren. Dieses Verfahren bedingt das Vorhandensein eines Passpunktkörpers, was zusätzlichen Aufwand und zusätzliche Kosten mit sich bringt.

Aus der US2004/039544 ist ein Fahrwerksvermessungssystem mit einem Messkopf bekannt, bei dem strukturiertes Licht eines Lasers auf ein Fahrzeugrad projiziert wird. Eine Messkamera empfängt dieses Licht. Weitere Fahrwerksvermessungseinrichtungen, bei denen strukturiertes Licht auf eine Referenzfläche projiziert wird und von einer Messkamera aufgenommen wird, sind aus US 5 978 077 und FR 2 808 082 bekannt.

Es ist daher Aufgabe der vorliegenden Erfindung, ein Fahrwerksvermessungssystem sowie ein Verfahren zum Bestimmen der Lageparameter von Messköpfen eines Fahrwerksvermessungssystems bereitzustellen, bei denen die Lageparameter der Messköpfe einfach, schnell und kostengünstig bestimmt werden können.

Diese Aufgabe wird durch das Fahrwerksvermessungssystem nach Anspruch 1 und das Verfahren zum Bestimmen der Lageparameter von Messköpfen eines Fahrwerksvermessungssystems nach Anspruch 8 vollständig gelöst. Vorteilhafte Weiterbildungen ergeben sich aus den abhängigen Ansprüchen.

Erfindungsgemäß wird der Begriff Fahrwerksvermessung als Oberbegriff für Achsvermessung und für weitere Anwendungen wie bspw. die dynamische Stoßdämpferprüfung verstanden. Unter dem Begriff Messkameras fallen erfindungsgemäß sämtliche optische Erfassungsgeräte, die in der berührungslosen Fahrwerksvermessung zum Einsatz kommen, insbesondere Videokameras und Videosensoren.

Gemäß einem Grundgedanken der Erfindung können die geometrischen Lageparameter der Messköpfe auf einfache Weise bestimmt werden und die von den Messköpfen erhaltenen Messdaten damit in einem gemeinsamen Koordinatensystem dargestellt werden, ohne dass zusätzliche Markierungen am Messplatz oder am Messkopf oder gar Passpunktkörper benötigt werden. Die Kosten für solche zusätzlichen Markierungen oder Passpunktkörper, die Verfahren gemäß dem Stand der Technik erforderlich sind, können erfindungsgemäß eingespart werden. Durch die erfindungsgemäße Bestimmung der Lageparameter der Messköpfe ist eine Kontrolle und eine ggf. erforderliche Wiederherstellung der geometrischen Lageparameter jederzeit auf einfache Zeit möglich. Falls eine Abweichung in der Positionierung der Messköpfe, insbesondere in deren Abstand und Ausrichtung, von den vorausgesetzten Sollwerten festgestellt wird, so können einerseits Messköpfe geeignet verschoben oder gedreht werden, sodass eine Übereinstimmung der tatsächlichen Lageparameter mit den vorbestimmten Lageparametern erreicht wird, und andererseits können die veränderten Lageparameter in die Berechnung der Transformation der lokalen Koordinatensysteme in das globale Koordinatensystem miteinbezogen werden, sodass die Nachführung der Lageparameter und die Wiederherstellung des gemeinsamen globalen Koordinatensystems rein rechnerisch erfolgt.

Ein Messkopf für ein Fahrwerksvermessungssystem umfasst eine Beleuchtungseinrichtung zur Generierung einer strukturierten Beleuchtung auf einem in Fahrzeugquerrichtung gegenüberliegenden Messkopf. Diese Beleuchtungseinrichtung ist so ausgelegt, dass sie sowohl auf dem zu vermessenden Objekt, als auch auf dem gegenüberliegenden Messkopf ein Strukturbild mit einem bekannten Muster erzeugt, dessen räumliche Ausdehnung den Anforderungen der gewünschten Messgenauigkeit entspricht. Der Messkopf umfasst des Weiteren eine in die gleiche Richtung wie die Beleuchtungseinrichtung weisende Referenzfläche, die so am Messkopf liegt, dass das Strukturbild der Beleuchtungseinrichtung des gegenüberliegenden Messkopfs auf ihr abgebildet werden kann. Der Messkopf beinhaltet des Weiteren wenigstens eine in die gleiche Richtung wie die Beleuchtungseinrichtung weisende Messkamera zum Erfassen des Strukturbilds auf der Referenzfläche des gegenüberliegenden Messkopfs und zum Bestimmen der Lageparameter des Messkopfs daraus. Die positionelle Beziehung der Beleuchtungseinrichtung, der Referenzfläche und der wenigstens einen Messkamera zueinander ist durch die Kalibrierung des Messkopfs bestimmt.

Beim erfindungsgemäßen Verfahren zum Bestimmen der Lageparameter von Messköpfen eines Fahrwerksvermessungssystems wird wenigstens ein Paar voneinander in Fahrzeugquerrichtung gegenüber liegenden Messköpfen bereitgestellt und für jedes Paar von ersten und zweiten Messköpfen werden die folgenden Schritte durchgeführt: Erzeugen eines Strukturbilds auf der Referenzfläche des zweiten Messkopfs durch die Beleuchtungseinrichtung des ersten Messkopfs und Erfassen des Strukturbilds durch die Messkamera des ersten Messkopfs; Bestimmen der Lageparameter der Referenzfläche des zweiten Messkopfs im lokalen Koordinatensystem des ersten Messkopfs durch Vergleich des erzeugten Strukturbilds mit gespeicherten Referenzbildern; und Bestimmen der Lageparameter der Messköpfe zueinander.

Durch die bekannte Orientierung zwischen der Beleuchtungseinheit und der oder den Kameras lassen sich, je nach Ausprägung des projizierten Strukturbilds auf der Referenzfläche des zweiten Messkopfs 3D-Punkte, Linien oder Teillinien im Koordinatensystem des ersten Messkopfs bestimmen. Aus den im ersten Messkopf gemessenen Informationen lässt sich die Orientierung der Referenzfläche des zweiten Messkopfs im Koordinatensystem des ersten Messkopfs bestimmen. Aus der Orientierung der Referenzfläche im ersten Messkopf und der im zweiten Messkopf bekannten Orientierung zwischen Messkopf und Referenzfläche lässt sich anschließend die gesuchte Orientierung zwischen dem ersten und dem zweiten Messkopf bestimmen.

Das erfindungsgemäße Verfahren kann sowohl zum Bestimmen der Orientierung der Messköpfe vor der eigentlichen Vermessung als auch zur Kontrolle und zum Nachführen der Orientierung während der Vermessung zum Einsatz kommen.

Beim Bestimmen der Orientierung vor der Vermessung werden die Messköpfe, ohne dass ein Kraftfahrzeug auf dem Messplatz steht, so zueinander ausgerichtet, dass die Beleuchtungen für die strukturierte Beleuchtung das Strukturbild auf die Referenzfläche des jeweils gegenüberliegenden Messkopfs projizieren. Die Verwendung der strukturierten Beleuchtung wirkt hierbei unterstützend. Da das projizierte Strukturbild unmittelbar an den anderen Messköpfen sichtbar ist und somit die Ausrichtung unterstützt, können die Lageparameter der Messköpfe mittels des erfindungsgemäßen Verfahrens bestimmt werden.

Die Kontrolle und das Nachführen der Orientierung der Messköpfe während der Messung kommt insbesondere bei flexiblen Achsmesssystemen zum Einsatz, bei denen die Messköpfe mobil sind und während der Messung bewegt werden können, bspw. um Kraftfahrzeuge mit unterschiedlichen Radständen erfassen zu können. Hierbei können durch das erfindungsgemäße Verfahren die Bewegung oder Verschiebung an dem Messkopf erkannt und nach Möglichkeit nachgeführt werden.

Wenn die Beleuchtungseinrichtung und die Referenzflächen so angebracht sind, dass eine wechselseitige Beobachtung unter- oder oberhalb des Fahrzeugs möglich ist, kann das erfindungsgemäße Verfahren nicht nur bei einem leeren Messplatz, sondern auch bei einem Messplatz mit darin angeordnetem Fahrzeug zum Einsatz kommen.

In einer einfachen Variante beinhalten das erfindungsgemäße Fahrwerksvermessungssystem sowie das erfindungsgemäße Verfahren zum Bestimmen der Lageparameter jeweils ein Paar voneinander in Fahrzeugquerrichtung gegenüber liegenden Messköpfen.

Bei einer Ausführung mit vier Messköpfen, die jeweils gegenüberliegend eines Rades eines Kraftfahrzeugs angeordnet sind, kann für wenigstens ein Paar von einander in Fahrzeuglängsrichtung gegenüber liegenden Messköpfen ebenfalls eine Bestimmung der Lageparameter durch Erzeugen eines Strukturbilds und Erfassen desselben durch eine Messkamera sowie durch Vergleich des aufgenommenen Strukturbilds mit gespeicherten Referenzbildern erfolgen. Dadurch kann die Längsverbindung zwischen den zwei Paaren von einander in Fahrzeugquerrichtung gegenüber liegenden Messköpfen hergestellt werden. Wenn eine solche Längsverbindung auf beiden Kraftfahrzeugseiten vorhanden ist, können auch dann, wenn ein Kraftfahrzeug auf dem Messplatz steht, Positionsänderungen zu jedem Zeitpunkt erkannt und auch nachgeführt werden.

Die Erfindung ist nachfolgend anhand von Ausführungsbeispielen mit Bezug auf die beiliegenden Figuren näher erläutert.
Figur 1 zeigt eine schematische Darstellung eines ersten berührungslosen Fahrwerksvermessungssystems auf einem Messplatz gemäß einem ersten Ausführungsbeispiel;
Figur 2 zeigt eine schematische Darstellung eines zweiten berührungslosen Fahrwerksvermessungssystems auf einem Messplatz gemäß einem zweiten Ausführungsbeispiel;
Figur 3 zeigt eine schematische Darstellung der vorderen Messköpfe des zweiten berührungslosen Fahrwerksvermessungssystems von vorne;
Figur 4 zeigt eine schematische Darstellung der vorderen Messköpfe des zweiten berührungslosen Fahrwerksvermessungssystems von vorne und der zugeordneten Koordinatensysteme;
Figur 5 zeigt eine schematische Darstellung des vorderen rechten Messkopfs des zweiten berührungslosen Fahrwerksvermessungssystems; und
Figur 6 zeigt anhand ihrer Teilfiguren (a), (b) und (c) drei exemplarische Strukturbilder, die durch Beleuchtungseinheiten des zweiten berührungslosen Fahrwerksvermessungssystems auf jeweils gegenüberliegenden Referenzflächen erzeugt werden.

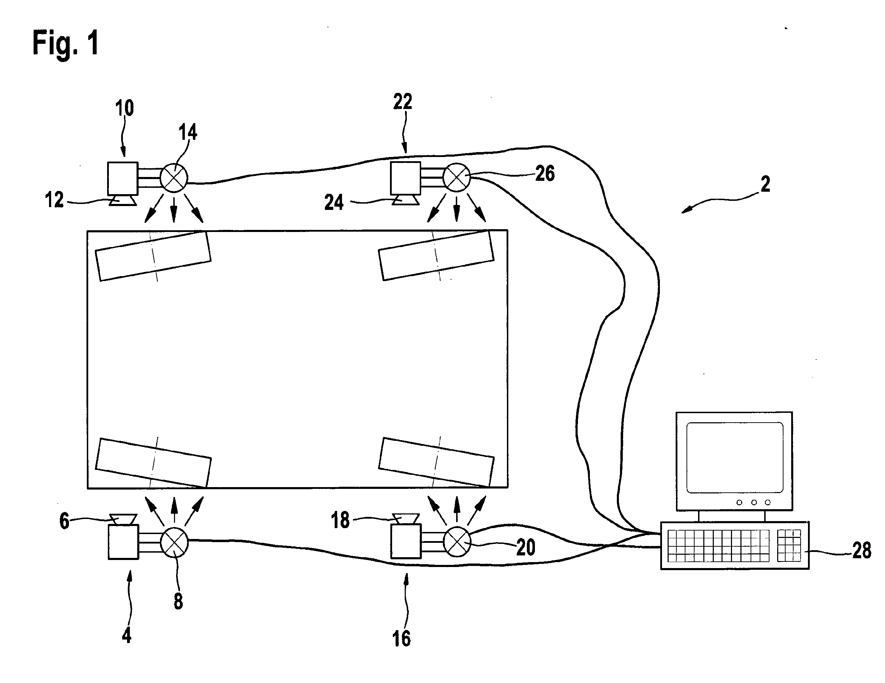

Auf dem Messplatz sind schematisch vier Räder eines Kraftfahrzeugs dargestellt. Neben dem linken Vorderrad ist ein erster Messkopf 4, neben dem rechten Vorderrad ist ein zweiter Messkopf 10, neben dem linken Hinterrad ist ein dritter Messkopf 16 und neben dem rechten Hinterrad ist ein vierter Messkopf 22 angeordnet. Die Messköpfe 4, 10, 16 und 22 verfügen jeweils über eine auf das direkt gegenüberliegende Fahrzeugrad gerichtete Messkamera 6, 12, 18, 24 sowie über eine jeweils zugeordnete Beleuchtungseinheit 8, 14, 20 und 26, die in Figur 1 exemplarisch an einem Ausleger der Messkameras 6, 12, 18 und 24 angebracht sind. Die Beleuchtungseinheiten 8, 14, 20 und 26 können auch in den Messkopf integriert sein, und sie erzeugen im Betrieb eine strukturierte Beleuchtung, die sowohl für die Vermessung der Radfelgen oder der an den Radfelgen angebrachten Messtargets als auch zur Referenzierung der Messköpfe zueinander dient. Unter Referenzierung wird dabei der Prozess zur Bestimmung der Lageparameter, also der Ausrichtung und der Abstände, der Messköpfe 4, 10, 16 und 22 zueinander bezeichnet. Die Messköpfe 4, 10, 16 und 22 verfügen des Weiteren über in Figur 1 nicht zu erkennende Referenzflächen, auf denen die Strukturbilder von den jeweils gegenüberliegenden Beleuchtungseinheiten 8, 14, 20 und 26 abgebildet werden können. Die Referenzierung setzt dabei voraus, dass eine Sichtverbindung zwischen den einander in Fahrzeugquerrichtung gegenüber liegenden Messköpfen 4 und 10 sowie 16 und 22 besteht, also dass kein Kraftfahrzeug auf dem Messplatz angeordnet ist oder dass ein Kraftfahrzeug die Sichtverbindung nicht behindert.

Die Messköpfe 4, 10, 16 und 22 sind in Figur 1 exemplarisch über Verbindungsleitungen mit einer Datenverarbeitungseinheit 28 verbunden. Diese Verbindung kann selbstverständlich auch drahtlos ausgeführt werden. Bei dem ersten Fahrwerksvermessungssystem 2 ergeben sich die Vorteile, dass eine Referenzierung der Messköpfe 4, 10 sowie 16 und 22 zueinander erfolgen kann, und dass hierfür auf die zur Vermessung ohnehin vorhandenen Beleuchtungseinheiten 8, 14, 20 und 26 zurückgegriffen werden kann, ohne hierfür separate Marken oder Passpunktkörper am Messplatz vorsehen zu müssen. Dadurch können Kosten eingespart werden.

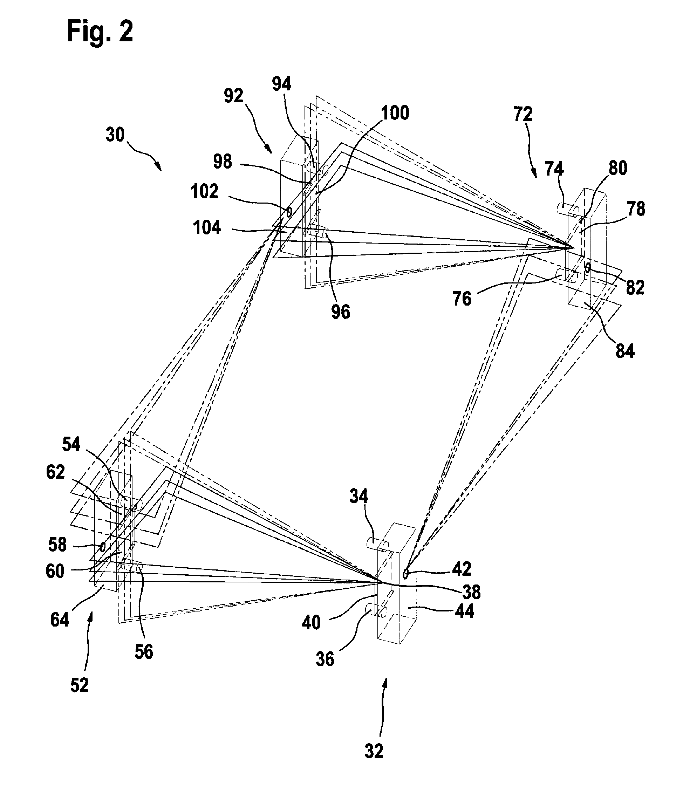

Figur 2 zeigt eine schematische Darstellung eines zweiten berührungslosen Fahrwerksvermessungssystems 30 auf einem Messplatz, auf dem kein Kraftfahrzeug angeordnet ist und insofern eine ungehinderte Sichtverbindung zwischen den in Kraftfahrzeugquerrichtung gegenüber liegenden Messköpfen 32 und 52 sowie 72 und 92 vorhanden ist.

Die Messköpfe 32, 52, 72 und 92 weisen eine quaderförmige Grundform mit senkrechter Erstreckung auf. Die Messköpfe 32, 52, 72 und 92 umfassen jeweils eine obere Stereomesskamera 34, 54, 74 und 94, eine untere Stereomesskamera 36, 56, 76 und 96, eine in Figur 2 sternförmig dargestellte zwischen den beiden Kameras eines Messkopfs angeordnete Querbeleuchtungseinheit 38, 58, 78 und 98 sowie eine zwischen den beiden Kameras eines Messkopfs angeordnete Querreferenzfläche 40, 60, 80 und 100. Diese Elemente weisen in die gleiche Richtung, nämlich in Fahrzeugquerrichtung und zu dem jeweils gegenüberliegenden Messkopf.

Die vorderen Messköpfe 32 und 52 haben an ihrer nach hinten gerichteten Seite jeweils sternförmig dargestellte Längsbeleuchtungseinheiten 42 und 62 sowie Längsreferenzflächen 44 und 64, die in etwa in mittlerer Höhe der hinteren Seite der vorderen Messköpfe 32 und 52 angeordnet sind. Des Weiteren verfügen die vorderen Messköpfe 32 und 52 über in Figur 2 nicht dargestellte, nach hinten weisende Referenzkameras.

Die hinteren Messköpfe 72 und 92 verfügen auf ihrer nach vorne weisenden Seite in etwa auf mittlerer Höhe jeweils nach vorne gerichtete Längsbeleuchtungseinheiten 82 und 102 sowie Längsreferenzflächen 84 und 104.

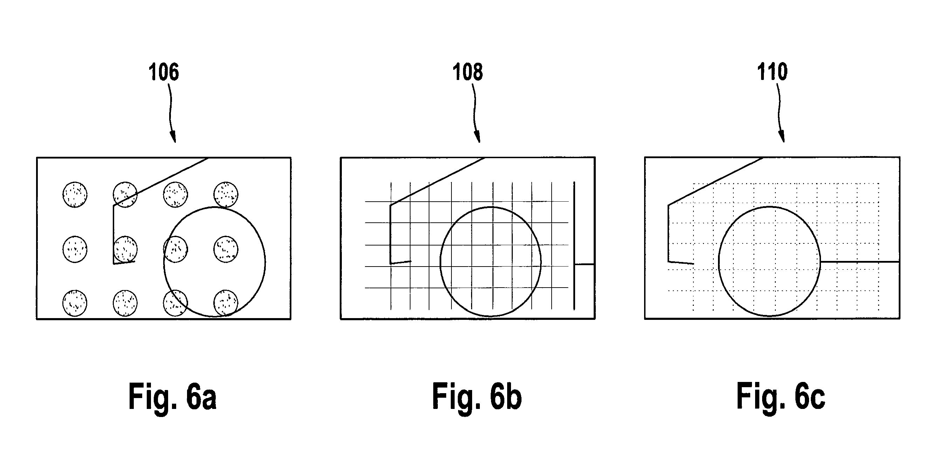

In Figur 2 ist des Weiteren die strukturierte Beleuchtung in Form von Lichtebenen dargestellt, die von der Querbeleuchtungseinheit 38 des vorderen linken Messkopfs 32, von der Längsbeleuchtungseinheit 42 des vorderen linken Messkopfs 32, von der Querbeleuchtungseinheit 78 des linken hinteren Messkopfs 72 und von der Längsbeleuchtungseinheit 102 des hinteren rechten Messkopfs 92 erzeugt werden. Diese strukturierten Beleuchtungen treffen auf die zugehörigen Referenzflächen 60, 84, 100 und 64 auf und bilden dort jeweils ein Strukturbild, wie es nachfolgend noch mit Bezug auf Figur 6 erläutert ist.

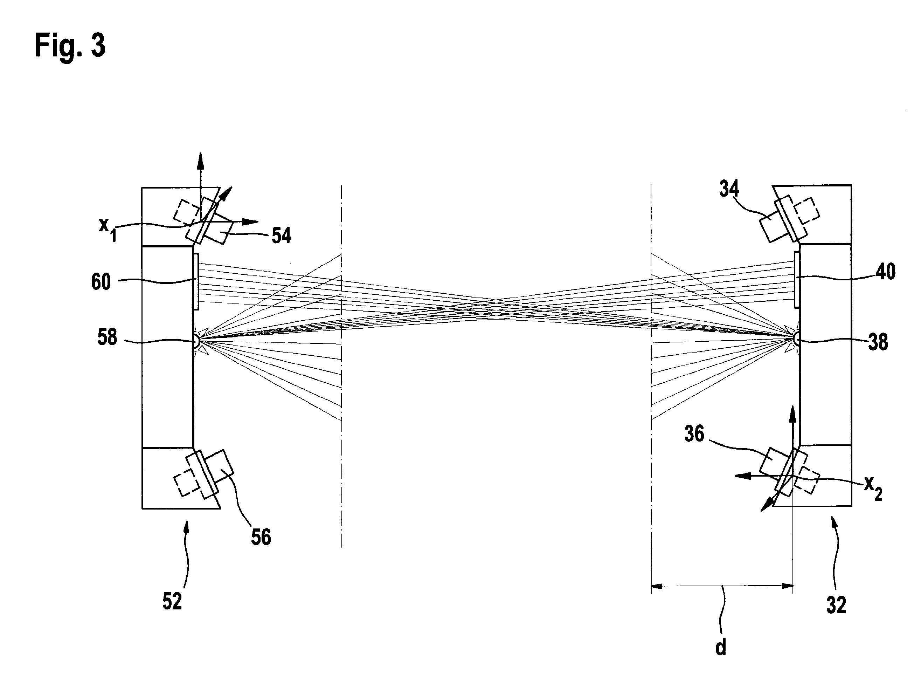

Figur 3 zeigt eine schematische Darstellung der vorderen Messköpfe 32 und 52 von vorne.

Dabei sind die unteren Stereomesskameras 36 und 56 leicht nach oben geneigt und die oberen Stereokameras 34 und 54 leicht nach unten geneigt dargestellt. Die Querbeleuchtungseinheiten 38 und 58 sind sternförmig dargestellt, als Laserbeleuchtungseinheiten ausgebildet und in etwa mittig zwischen den oberen und unteren Messkameras angeordnet. Im Ausführungsbeispiel der Figur 3 sind die Querreferenzflächen 40 und 60 separat dargestellt, zwischen den Querbeleuchtungseinheiten 38, 58 und den oberen Stereokameras 34 und 54 angeordnet und vertikal ausgerichtet. Mittels d ist der übliche Abstand zwischen dem vorderen linken Messkopf 32 und dem Rad/der Radfelge bzw. des darauf angebrachten Targets des zu vermessenden Kraftfahrzeugs dargestellt. Mittels der durch Linien dargestellten strukturierten Beleuchtung, die jeweils von den Querbeleuchtungseinheiten 38 und 58 ausgestrahlt wird, kann somit sowohl die zu vermessende Radfelge oder das auf der Radfelge angebrachte zu vermessende Target ausgeleuchtet werden, als auch ein Strukturbild auf der Querreferenzfläche 40, 60 des jeweils gegenüberliegenden Messkopfs 32 und 52 dargestellt werden.

Des Weiteren ist in Figur 3 mit X₁ das lokale Koordinatensystem des vorderen rechten Messkopfs 52 und mit X₂ das lokale Koordinatensystem des vorderen linken Messkopfs 32 angedeutet.

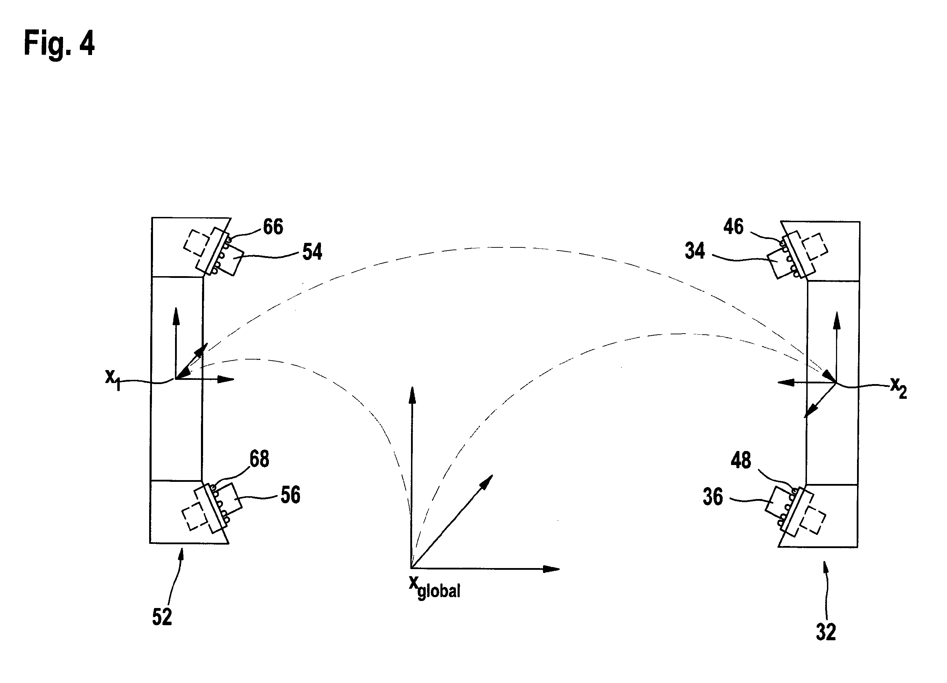

Figur 4 zeigt eine schematische Darstellung der vorderen Messköpfe 32 und 52 und der zugeordneten Koordinatensysteme.

In Figur 4 sind die oberen Stereomesskameras 34, 54 mit ringförmig angeordneten Mess-LEDs und die unteren Stereokameras 36, 56 mit ringförmig angeordneten unteren Mess-LEDs 48, 68 ausgestattet. Diese Mess-LEDs 46, 66; 48, 68 können zusätzlich oder anstatt der Querbeleuchtungseinheiten 38 und 58 vorgesehen sein. Die Querreferenzflächen 40 und 60 sind in Figur 4 nicht separat dargestellt. Bei den vorderen Messköpfen 32 und 52 gemäß Figur 4 sind die Querreferenzflächen von den senkrechten Flächen zwischen den oberen Stereomesskameras 34, 54 und den unteren Stereokameras 36, 56 gebildet.

Des Weiteren ist das lokale Koordinatensystem X₁ des vorderen rechten Messkopfs 52, das lokale Koordinatensystem X₂ des vorderen linken Messkopfs 32 und das globale Koordinatensystem X_{global} dargestellt. Mittels der erfindungsgemäßen Referenzierung werden die lokalen Koordinatensysteme X₁ und X₂ in das globale Koordinatensystem X_{global} transformiert.

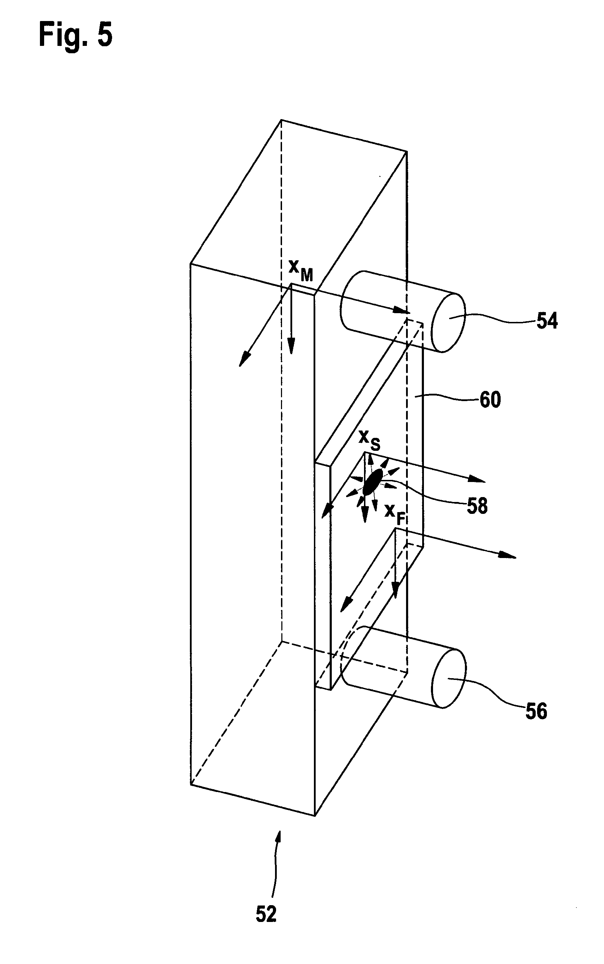

Figur 5 zeigt eine schematische Darstellung des vorderen rechten Messkopfs 52.

Bei dieser Ausführung des vorderen rechten Messkopfs 52 ist die Querreferenzfläche 60 unterhalb der Querbeleuchtungseinheit 58 angeordnet. Des Weiteren sind die lokalen Koordinatensysteme X_{F} der Querreferenzfläche 60, X_{S} der Querbeleuchtungseinheit zur Erzeugung der strukturierten Beleuchtung 58 und X_{M} des vorderen rechten Messkopfs 52 dargestellt. Die Querreferenzfläche 60 ist relativ zum Messkopf 52 kalibriert.

Diese Bezugssysteme des vorderen Messkopfs 52 sind für die Referenzierung desselben erforderlich.

Vor Inbetriebnahme des Messkopfes 52 muss in einem Kalibrierprozess die Orientierung der Querbeleuchtungseinheit 58, der Querreferenzfläche 60 und des Messkopfs 52 an sich mit bekannten Verfahren bestimmt werden. Durch die Kalibrierung werden die relativen Orientierungen zwischen den unterschiedlichen lokalen Koordinatensystemen X_{F}, X_{S} und X_{M} bestimmt. Nach der Kalibrierung erhält man die Orientierung X_{M_F} zwischen dem lokalen Koordinatensystem X_{F} der Querreferenzfläche 60 und dem Koordinatensystem X_{M} des Messkopfs 52 und die Orientierung X_{M_S} zwischen dem lokalen Koordinatensystem X_{S} der Querbeleuchtungseinheit für die strukturierte Beleuchtung 58 und dem Koordinatensystem X_{M} des Messkopfs 52. Diese Orientierungen werden abgespeichert und für die folgenden Messungen als konstant angesehen.

Figur 6 zeigt anhand ihrer Teilfiguren (a), (b) und (c) drei exemplarische Strukturbilder 106, 108 und 110, wie sie durch die Beleuchtungseinheiten 38, 58, 68, 98, 42, 62, 82, 102 auf gegenüberliegenden Referenzflächen 40, 60, 80, 100, 44, 64, 84, 104 erzeugt werden und von den jeweils zugeordneten Kameras 34, 54, 74, 94, 36, 56, 76, 96 sowie von den nicht gezeigten Längsreferenzkameras erfasst werden.

Bei den Strukturbildern 106, 108 und 110 ist mittels eines Kreises das von der jeweils gegenüberliegenden Kamera betrachtete Blickfeld dargestellt. Das Strukturbild 106 zeigt eine Matrix-Punkt-Anordnung, das Strukturbild 108 zeigt eine Gitterlinien-Anordnung und das Strukturbild 110 zeigt eine Gitter-Teillinien-Anordnung.

Die Funktionsweise des erfindungsgemäßen Fahrwerksvermessungssystems und des erfindungsgemäßen Verfahrens zur Bestimmung der Lageparameter von Messköpfen eines Fahrwerksvermessungssystems ist nachfolgend exemplarisch mit Bezug auf die Figuren 2 und 3 beschrieben.

In einer einfachen Ausführungsform reicht es aus, dass das Fahrwerksvermessungssystem ein Paar von einander in Fahrzeugquerrichtung gegenüber liegenden Messköpfen 32 und 52 umfasst. Durch die Querbeleuchtungseinheit 38 wird eine strukturierte Beleuchtung erzeugt und dementsprechend auf der gegenüberliegenden Querreferenzfläche 60 ein Strukturbild erzeugt, wie es in Figur 6 gezeigt ist. Dieses Strukturbild wird durch wenigstens eine der beiden Kameras 34 und 36 des ersten Messkopfs 32 aufgenommen. Durch die kalibrierte und damit bekannte Orientierung X_{M_S} zwischen der Querbeleuchtungseinheit 38 und der Kamera 34 oder 36 bzw. den Kameras 34 und 36 lassen sich, je nach Ausprägung des projizierten Musters auf der Querreferenzfläche 60 des zweiten Messkopfs 52 3D-Punkte, 3D-Linien oder Teillinien im Koordinatensystem des Messkopfs 32 bestimmen. Aus den in dem Messkopf 32 gemessenen Informationen lässt sich dann die Orientierung X_{FA} der Querreferenzfläche 60 des vorderen rechten Messkopfs 52 im Koordinatensystem des vorderen linken Messkopfs 32 bestimmen. Aus der Orientierung X_{FA} und der im vorderen rechten Messkopf 52 kalibrierten Orientierung zwischen dem Messkopf und der Referenzfläche lässt sich anschließend die gesuchte Orientierung X_{AB} zwischen den Messköpfen 32 und 52 bestimmen. Mindestvoraussetzung für die Bestimmung der gegenseitigen Orientierung ist es, dass das beschriebene Verfahren von einem Messkopf durchgeführt wird, wie dieses vorliegend für den vorderen linken Messkopf 32 beschrieben worden.

Da der gegenüberliegende Messkopf 52 dieselben Systemkomponenten umfasst, lässt sich durch die Messung mit dem gegenüberliegenden Messkopf 52 die Genauigkeit steigern bzw. das Ergebnis kontrollieren. Für die beiden vorderen Messköpfe 32 und 52 bedeutet dies, dass Messungen auch von dem vorderen rechten Messkopf 52 ausgeführt werden können.

Wenn die Lageparameter zwischen vier Messköpfen bestimmt werden sollen, muss in wenigstens zwei Messköpfe eine weitere Kamera und eine weitere Beleuchtungseinheit integriert werden, sodass auch Beobachtungen in Fahrzeuglängsrichtung möglich sind. Bei dem zweiten Fahrwerksvermessungssystem 30 ist dies exemplarisch dargestellt. Dieses umfasst in dem vorderen linken Messkopf 32 und in dem hinteren rechten Messkopf 92 jeweils eine in Figur 2 nicht dargestellte Längsreferenzkamera und eine Längsbeleuchtungseinheit 42 und 102 sowie in dem jeweils gegenüberliegenden Messkopf, also dem hinteren linken Messkopf 72 und dem vorderen rechten Messkopf 52 jeweils eine Längsreferenzfläche 84 und 64. Die Bestimmung der gegenseitigen Orientierung und der Lageparameter zwischen dem vorderen linken Messkopf 32 und dem hinteren linken Messkopf 72 sowie zwischen dem hinteren rechten Messkopf 72 und dem vorderen rechten Messkopf 52 kann dann analog dem oben beschriebenen Verfahren erfolgen. In einer alternativen Ausführungsform kann die Längsverbindung auch anders überprüft werden.

Werden in jedem Messkopf die zusätzlichen Komponenten integriert, lassen sich durch die zusätzlichen wechselseitigen Beobachtungen die Genauigkeit steigern und die Ergebnisse kontrollieren.

## Patentansprüche

1. Fahrwerksvermessungssystem, umfassend
wenigstens ein Paar von einander in Fahrzeugquerrichtung gegenüberliegenden Messköpfen (32, 52; 72, 92) wobei jeder Messkopf folgende Merkmale ausweist:
- eine Beleuchtungseinrichtung zum Erzeugen einer strukturierten Beleuchtung (38, 58, 78, 98), die so ausgebildet ist, dass sie ein Strukturbild auf einem in Fahrzeugquerrichtung gegenüberliegenden Messkopf (32, 52; 72, 92) erzeugt,
- eine in die gleiche Richtung wie die Beleuchtungseinrichtung (38, 58, 78, 98) weisende Referenzfläche (40, 60, 80, 100), auf der ein durch eine Beleuchtungseinrichtung (38, 58; 78, 98) des in Fahrzeugquerrichtung gegenüberliegenden Messkopfes (32, 52; 72, 92) erzeugtes Strukturbild abbildbar ist,
- wenigstens eine in die gleiche Richtung wie die Beleuchtungseinrichtung (38, 58, 78, 98) weisende Messkamera (34, 36; 54, 56; 74, 76; 94, 96), die so ausgebildet ist, dass sie zum Bestimmen der Lageparameter des Messkopfes (32, 52, 72, 92) das Strukturbild auf der Referenzfläche (40, 60; 80, 100) des gegenüberliegenden Messkopfes (32, 52; 72, 92) erfasst,
eine mit den Messköpfen (32, 52, 72, 92) verbundene Datenverarbeitungseinheit, die so ausgebildet ist, dass sie aus dem Vergleich des erzeugten Strukturbilds auf der Referenzfläche (40, 60, 80, 100) eines Messkopfes (32, 52, 72, 92), das durch die Beleuchtungseinrichtung (38, 58, 78, 98) des gegenüberliegenden Messkopfes (32, 52; 72, 92) erzeugt und von der Messkamera (34, 36; 54, 56; 74, 76; 94, 96) des gegenüberliegenden Messkopfes (32, 52; 72, 92) erfasst worden ist, mit gespeicherten Referenzbildern die Lageparameter der Messköpfe (32, 52, 72, 92) zueinander ermittelt.

2. Fahrwerksvermessungssystem nach Anspruch 1,
wobei an den Messköpfen zwei in die gleiche Richtung gerichtete Messkameras (34, 36; 54, 56; 74, 76; 94, 96) vorgesehen sind.

3. Fahrwerksvermessungssystem nach Anspruch 2,
wobei an den Messköpfen die Referenzfläche (40, 60, 80, 100) zwischen den beiden Messkameras (34, 36; 54, 56; 74, 76; 94, 96) angeordnet ist.

4. Fahrwerksvermessungssystem nach einem der Ansprüche 1 bis 3,
wobei an den Messköpfen die Beleuchtungseinrichtung (38, 58, 78, 98) zwischen den beiden Messkameras (34, 36; 54, 56; 74, 76; 94, 96) angeordnet ist.

5. Fahrwerksvermessungssystem nach einem der Ansprüche 1 bis 3,
wobei an den Messköpfen die Beleuchtungseinrichtung (8, 14, 20, 26) an einem an dem Messkopf (32, 52, 72, 92) angebrachten Ausleger angeordnet ist.

6. Fahrwerksvermessungssystem nach einem der Ansprüche 1 bis 5, aufweisend zwei Paare von einander in Fahrzeugquerrichtung gegenüberliegenden Messköpfen (32, 52; 72, 92), wobei die Messköpfe weiterhin eine zusätzliche in Fahrzeuglängsrichtung weisende Referenzfläche (44, 64, 84, 104) umfassen, auf der ein durch eine Beleuchtungseinrichtung (42, 62, 82, 102) eines in Fahrzeuglängsrichtung gegenüberliegenden Messkopfes (32, 52; 72, 92) erzeugtes Strukturbild abbildbar ist,
wobei die Datenverarbeitungseinheit so ausgebildet ist, dass für jedes Paar von einander in Fahrzeugquerrichtung gegenüberliegenden Messköpfen (32, 52; 72, 92) wenigstens ein Strukturbild auf einer in Fahrzeugquerrichtung weisenden Referenzfläche (40, 60, 80, 100) mit gespeicherten Referenzbildern verglichen wird, und dass zusätzlich wenigstens ein Strukturbild auf einer in Fahrzeuglängsrichtung weisenden Referenzfläche (44, 64, 84, 104) mit gespeicherten Referenzbildern verglichen wird.

7. Fahrwerksvermessungssystem nach Anspruch 6,
wobei der Messkopf folgende Merkmale weiterhin umfasst:
- eine zusätzliche in Fahrzeuglängsrichtung weisende Beleuchtungseinrichtung zum Erzeugen einer strukturierten Beleuchtung (42, 62, 82, 102), die so ausgebildet ist, dass sie ein Strukturbild auf einem in Fahrzeuglängsrichtung gegenüberliegenden Messkopf (32, 52; 72, 92) erzeugt,
- wenigstens eine in die gleiche Richtung wie die Beleuchtungseinrichtung (42, 62, 82, 102) weisende Messkamera (34, 36; 54, 56; 74, 76; 94, 96), die so ausgebildet ist, dass sie zum Bestimmen der Lageparameter des Messkopfes (32, 52, 72, 92) das Strukturbild auf der Referenzfläche (44, 64, 84, 104) des in Fahrzeuglängsrichtung gegenüberliegenden Messkopfes (32, 52, 72, 92) erfasst.

8. Verfahren zum Bestimmen der Lageparameter von Messköpfen eines Fahrwerksvermessungssystems nach Anspruch 6 oder 7, bei dem wenigstens ein Paar von einander in Fahrzeugquerrichtung gegenüberliegenden Messköpfen (32, 52; 72, 92) bereitgestellt wird und bei dem für jedes Paar von erstem und zweitem Messkopf (32, 52; 72, 92) die folgenden Schritte durchgeführt werden:
Erzeugen eines Strukturbilds auf der Referenzfläche (60; 100) des zweiten Messkopfs (52; 92) durch die Beleuchtungseinrichtung (38; 78) des ersten Messkopfs (32; 72);
Erfassen des Strukturbilds durch die Messkamera (34, 36; 74, 76) des ersten Messkopfes (32; 72);
Bestimmen der Lageparameter der Referenzfläche (60; 100) des zweiten Messkopfs (52; 92) im lokalen Koordinatensystem des ersten Messkopfs (32; 72) durch Vergleich des erzeugten Strukturbilds mit gespeicherten Referenzbildern; und
Bestimmen der Lageparameter der Messköpfe (32, 52; 72, 92) zueinander.

9. Verfahren nach Anspruch 8,
wobei für jedes Paar von erstem und zweitem Messkopf (32, 52; 72, 92) die folgenden Schritte durchgeführt werden:
Erzeugen eines Strukturbilds auf der Referenzfläche (40, 80) des ersten Messkopfs (32; 72) durch die Beleuchtungseinrichtung (58; 98) des zweiten Messkopfs (52; 92);
Erfassen des Strukturbilds durch die Messkamera (54, 56; 94, 96) des zweiten Messkopfes (52; 92);
Bestimmen der Lageparameter der Referenzfläche (40, 80) des ersten Messkopfs (32; 72) im lokalen Koordinatensystem des zweiten Messkopfs (52; 92) durch Vergleich des erzeugten Strukturbilds mit gespeicherten Referenzbildern; und
Bestimmen der Lageparameter der Messköpfe (32, 52; 72, 92) zueinander.

10. Verfahren nach Anspruch 8 oder 9,
wobei für wenigstens ein Paar von einander in Fahrzeuglängsrichtung gegenüberliegenden Messköpfen (32, 72; 52, 92) die folgenden Schritte durchgeführt werden:
Erzeugen eines Strukturbilds auf der Referenzfläche (44, 84; 64, 104) des in Fahrzeuglängsrichtung gegenüberliegenden Messkopfs (32, 72; 52, 92) und Erfassen des Strukturbilds;
Bestimmen der Lageparameter der Referenzfläche (44, 84; 64, 104) des in Fahrzeuglängsrichtung gegenüberliegenden Messkopfs (32, 72; 52, 92) im lokalen Messkopf-Koordinatensystem durch Vergleich des erzeugten Strukturbilds mit gespeicherten Referenzbildern; und
Bestimmen der Lageparameter der einander in Fahrzeuglängsrichtung gegenüberliegenden Messköpfe (32, 72; 52, 92) zueinander.

## Claims

1. Chassis-measuring system, comprising at least one pair of measuring heads (32, 52; 72, 92) situated opposite one another in the transverse direction of the vehicle, wherein each measuring head has the following features:
- an illumination device for generating a structured illumination (38, 58, 78, 98), which is embodied such that it generates a structure image on a measuring head (32, 52; 72, 92) situated opposite in the transverse direction of the vehicle,
- a reference surface (40, 60, 80, 100) facing in the same direction as the illumination device (38, 58, 78, 98), on which reference surface a structure image generated by an illumination device (38, 58; 78, 98) of the measuring head (32, 52; 72, 92) situated opposite in the transverse direction of the vehicle can be imaged,
- at least one measuring camera (34, 36; 54, 56; 74, 76; 94, 96), which faces in the same direction as the illumination device (38, 58, 78, 98) and is embodied such that, for determining the positioning parameters of the measuring head (32, 52; 72, 92), it detects the structure image on the reference surface (40, 60; 80, 100) of the measuring head (32, 52; 72, 92) situated opposite, a data processing unit, which is connected to the measuring heads (32, 52, 72, 92) and is embodied such that it determines the position parameters of the measuring heads (32, 52, 72, 92) with respect to one another from the comparison of the generated structure image on the reference surface (40, 60; 80, 100) of a measuring head (32, 52; 72, 92), which structure image was generated by the illumination device (38, 58, 78, 98) of the measuring head (32, 52; 72, 92) situated opposite and was detected by the measuring camera (34, 36; 54, 56; 74, 76; 94, 96) of the measuring head (32, 52; 72, 92) situated opposite, with stored reference images.

2. Chassis-measuring system according to Claim 1,
wherein two measuring cameras (34, 36; 54, 56; 74, 76; 94, 96) directed in the same direction are provided on the measuring heads.

3. Chassis-measuring system according to Claim 2,
wherein on the measuring heads the reference surface (40, 60, 80, 100) is arranged between the two measuring cameras (34, 36; 54, 56; 74, 76; 94, 96).

4. Chassis-measuring system according to any of Claims 1 to 3,
wherein on the measuring heads the illumination device (38, 58, 78, 98) is arranged between the two measuring cameras (34, 36; 54, 56; 74, 76; 94, 96).

5. Chassis-measuring system according to any of Claims 1 to 3,
wherein on the measuring heads the illumination device (8, 14, 20, 26) is arranged on a cantilever fitted to the measuring head (32, 52, 72, 92).

6. Chassis-measuring system according to any of Claims 1 to 5,
having two pairs of measuring heads (32, 52; 72, 92) situated opposite one another in the transverse direction of the vehicle, wherein the measuring heads furthermore comprise an additional reference surface (44, 64, 84, 104) facing in the longitudinal direction of the vehicle, on which additional reference surface a structure image generated by an illumination device (42, 62, 82, 102) of a measuring head (32, 52; 72, 92) situated opposite in the longitudinal direction of the vehicle can be imaged,
wherein the data processing unit is embodied such that for each pair of measuring heads (32, 52; 72, 92) situated opposite one another in the transverse direction of the vehicle at least one structure image on a reference surface (40, 60, 80, 100) facing in the transverse direction of the vehicle is compared with stored reference images, and that additionally at least one structure image on a reference surface (44, 64, 84, 104) facing in the longitudinal direction of the vehicle is compared with stored reference images.

7. Chassis-measuring system according to Claim 6, wherein the measuring head further comprises the following features:
- an additional illumination device facing in the longitudinal direction of the vehicle and serving for generating a structured illumination (42, 62, 82, 102), which is embodied such that it generates a structure image on a measuring head (32, 52; 72, 92) situated opposite in the longitudinal direction of the vehicle,
- at least one measuring camera (34, 36; 54, 56; 74, 76; 94, 96) which faces in the same direction as the illumination device (42, 62, 82, 102) and is embodied such that, for determining the position parameters of the measuring head (32, 52, 72, 92) it detects the structure image on the reference surface (44, 64, 84, 104) of the measuring head (32, 52, 72, 92) situated opposite in the longitudinal direction of the vehicle.

8. Method for determining the position parameters of measuring heads of a chassis-measuring system according to Claim 6 or 7, wherein
at least one pair of measuring heads (32, 52; 72, 92) situated opposite one another in the transverse direction of the vehicle is provided and wherein the following steps are carried out for each pair of first and second measuring heads (32, 52; 72, 92):
generating a structure image on the reference surface (60; 100) of the second measuring head (52; 92) by means of the illumination device (38; 78) of the first measuring head (32; 72);
detecting the structure image by means of the measuring camera (34, 36; 74, 76) of the first measuring head (32; 72);
determining the position parameters of the reference surface (60; 100) of the second measuring head (52; 92) in the local co-ordinate system of the first measuring head (32; 72) by the comparison of the generated structure image with stored reference images; and
determining the position parameters of the measuring heads (32, 52; 72, 92) with respect to one another.

9. Method according to Claim 8,
wherein the following steps are carried out for each pair of first and second measuring heads (32, 52; 72, 92):
generating a structure image on the reference surface (40, 80) of the first measuring head (32; 72) by means of the illumination device (58; 98) of the second measuring head (52; 92);
detecting the structure image by means of the measuring camera (54, 56; 94, 96) of the second measuring head (52; 92);
determining the position parameters of the reference surface (40, 80) of the first measuring head (32; 72) in the local co-ordinate system of the second measuring head (52; 92) by the comparison of the generated structure image with stored reference images; and
determining the position parameters of the measuring heads (32, 52; 72, 92) with respect to one another.

10. Method according to Claim 8 or 9,
wherein the following steps are carried out for at least one pair of measuring heads (32, 72; 52, 92) situated opposite one another in the longitudinal direction of the vehicle:
generating a structure image on the reference surface (44, 84; 64, 104) of the measuring head (32, 72; 52, 92) situated opposite in the longitudinal direction of the vehicle, and
detecting the structure image;
determining the position parameters of the reference surface (44, 84; 64, 104) of the measuring head (32, 72; 52, 92) situated opposite in the longitudinal direction of the vehicle in the local measuring head co-ordinate system by the comparison of the generated structure image with stored reference images; and determining the position parameters of the measuring heads (32, 72; 52, 92) situated opposite one another in the longitudinal direction of the vehicle with respect to one another.

## Revendications

1. Système de mesure de châssis, comprenant :
au moins une paire de têtes de mesure (32, 52 ; 72, 92) opposées l'une à l'autre dans une direction transversale au véhicule, dans lequel chaque tête de mesure présente les caractéristiques suivantes :
- un dispositif d'éclairage destiné à générer un éclairage structuré (38, 58, 78, 98), qui est conçu de manière à ce qu'une image de structure soit générée sur une tête de mesure (32, 52 ; 72, 92) opposée dans une direction transversale au véhicule,
- une surface de référence (40, 60, 80, 100) orientée dans la même direction que le dispositif d'éclairage (38, 58, 78, 98), sur laquelle peut être formée une image de structure générée par un dispositif d'éclairage (38, 58 ; 78, 98) de la tête de mesure (32, 52 ; 72, 92) opposée dans la direction transversale au véhicule,
- au moins une caméra de mesure (34, 36 ; 54, 56 ; 74, 76 ; 94, 96) orientée dans la même direction que le dispositif d'éclairage (38, 58, 78, 98), qui est conçue de manière à acquérir l'image de structure sur la surface de référence (40, 60 ; 80, 100) de la tête de mesure (32, 52 ; 72, 92) opposée pour déterminer les paramètres de position de la tête de mesure (32, 52, 72, 92),
une unité de traitement de données connectée aux têtes de mesure (32, 52, 72, 92), qui est conçue de manière à établir les paramètres de position des têtes de mesure (32, 52, 72, 92) l'une par rapport à l'autre par comparaison de l'image de structure générée sur la surface de référence (40, 60, 80, 100) d'une tête de mesure (32, 52 ; 72, 92), laquelle image de structure a été générée par le dispositif d'éclairage (38, 58, 78, 98) de la tête de mesure opposée (32, 52 ; 72, 92) et a été acquise par la caméra de mesure (34, 36 ; 54, 56 ; 74, 76 ; 94, 96) de la tête de mesure opposée (32, 52, 72, 92), à des images de référence mémorisées.

2. Système de mesure de châssis selon la revendication 1, dans lequel deux caméras de mesure (34, 36 ; 54, 56 ; 74, 76 ; 94, 96) dirigées dans la même direction sont prévues sur les têtes de mesure.

3. Système de mesure de châssis selon la revendication 2, dans lequel la surface de référence (40, 60, 80, 100) est disposée sur les têtes de mesure entre les deux caméras de mesure (34, 36 ; 54, 56 ; 74, 76 ; 94, 96).

4. Système de mesure de châssis selon l'une quelconque des revendications 1 à 3, dans lequel le dispositif d'éclairage (38, 58, 78, 98) est disposé sur les têtes de mesure entre les deux caméras de mesure (34, 36 ; 54, 56 ; 74, 76 ; 94, 96).

5. Système de mesure de châssis selon l'une quelconque des revendications 1 à 3, dans lequel le dispositif d'éclairage (8, 14, 20, 26) est disposé sur les têtes de mesure, à l'emplacement d'une potence montée sur la tête de mesure (32, 52, 72, 92).

6. Système de mesure de châssis selon l'une quelconque des revendications 1 à 5, comportant deux paires de têtes de mesure (32, 52 ; 72, 92) opposées l'une à l'autre dans une direction transversale au véhicule, dans lequel les têtes de mesure comprennent en outre une surface de référence supplémentaire (44, 64, 84, 104) orientée dans la direction longitudinale du véhicule, surface de référence sur laquelle peut être formée une image de structure générée par un dispositif d'éclairage (42, 62, 82, 102) d'une tête de mesure (32, 52 ; 72, 92) opposée dans la direction longitudinale du véhicule,
dans lequel l'unité de traitement de données est conçue de manière à ce que, pour chaque paire de têtes de mesure (32, 52 ; 72, 92) opposées l'une à l'autre dans une direction transversale au véhicule, au moins une image de structure sur une surface de référence (40, 60, 80, 100) orientée dans une direction transversale au véhicule est comparée à des images de référence mémorisées, et à ce qu'en outre au moins une image de structure sur une surface de référence orientée dans une direction longitudinale du véhicule (44, 64, 84, 104) soit comparée à des images de référence mémorisées.

7. Système de mesure de châssis selon la revendication 6,
dans lequel la tête de mesure comprend en outre les caractéristiques suivantes :
- un dispositif d'éclairage supplémentaire orienté dans la direction longitudinale du véhicule pour générer un éclairage structuré (42, 62, 82, 102), lequel dispositif d'éclairage est conçu de manière à générer une image de structure sur une tête de mesure (32, 52 ; 72, 92) opposée dans la direction longitudinale du véhicule,
- au moins une caméra de mesure (34, 36 ; 54, 56 ; 74, 76 ; 94, 96) orientée dans la même direction que le dispositif d'éclairage (42, 62, 82, 102), laquelle caméra de mesure est conçue de manière à acquérir l'image de structure sur la surface de référence (44, 64, 84, 104) de la tête de mesure (32, 52, 72, 92) opposée dans la direction longitudinale du véhicule, pour déterminer les paramètres de position de la tête de mesure (32, 52, 72, 92).

8. Procédé pour déterminer les paramètres de position de têtes de mesure d'un système de mesure de châssis selon la revendication 6 ou 7, dans lequel il est prévu une paire de têtes de mesure (32, 52 ; 72, 92) opposées l'une à l'autre dans une direction transversale au véhicule et dans lequel, pour chaque paire constituée d'une première et d'une seconde tête de mesure (32 52 ; 72, 92), les étapes suivantes sont exécutées :
générer une image de structure sur la surface de référence (60 ; 100) de la seconde tête de mesure (52 ; 92) au moyen du dispositif d'éclairage (38 ; 78) de la première tête de mesure (32 ; 72) ;
acquérir l'image de structure au moyen de la caméra de mesure (34, 36 ; 74, 76) de la première tête de mesure (32 ; 72) ;
déterminer les paramètres de positon de la surface de référence (60 ; 100) de la seconde tête de mesure (52 ; 92) dans un système de coordonnées local de la première tête de mesure (32 ; 72) par comparaison de l'image de structure générée à des images de référence mémorisées ; et
déterminer les paramètres de positon des têtes de mesure (32, 52 ; 72, 92) l'une par rapport à l'autre.

9. Procédé selon la revendication 8,
dans lequel, pour chaque paire constituée d'une première et d'une seconde tête de mesure (32, 52 ; 72, 92), les étapes suivantes sont exécutées :
générer une image de structure sur la surface de référence (40, 80) de la première tête de mesure (32 ; 72) au moyen du dispositif d'éclairage (58 ; 98) de la seconde tête de mesure (52 ; 92) ;
acquérir l'image de structure au moyen de la caméra de mesure (54, 56 ; 94, 96) de la seconde tête de mesure (52 ; 92) ;
déterminer les paramètres de position de la surface de référence (40 ; 80) de la première tête de mesure (32 ; 72) dans un système de coordonnées local de la seconde tête de mesure (52 ; 92) par comparaison de l'image de structure générée à des images de référence mémorisées ; et
déterminer les paramètres de position des têtes de mesure (32, 52 ; 72, 92) l'une par rapport à l'autre.

10. Procédé selon la revendication 8 ou 9,
dans lequel, pour au moins une paire de têtes de mesure (32, 72 ; 52, 92) opposées l'une à l'autre dans la direction longitudinale du véhicule, les étapes suivantes sont exécutées :
générer une image de structure sur la surface de référence (44, 84 ; 64, 104) de la tête de mesure (32, 72 ; 52, 92) opposée dans la direction longitudinale du véhicule, et acquérir l'image de structure ;
déterminer les paramètres de position de la surface de référence (44, 84 ; 64, 104) de la tête de mesure (32, 72 ; 52, 92) opposée dans la direction longitudinale du véhicule dans un système de coordonnées de tête de mesure local par comparaison de l'image de structure générée à des images de référence mémorisées ; et
déterminer les paramètres de position des têtes de mesure (32, 72 ; 52, 92) opposées l'une à l'autre dans la direction longitudinale du véhicule l'une par rapport à l'autre.
